Europäisches Patentamt

**European Patent Office**

Office européen des brevets

(19)

(11) Publication number: **0 012 557**
**B1**

(12) **EUROPEAN PATENT SPECIFICATION**

(45) Date of publication of patent specification: **16.02.83**

(21) Application number: **79302787.1**

(22) Date of filing: **04.12.79**

(51) Int. Cl.³: **B 01 D 13/04, C 08 J 5/22, C 08 L 27/16, C 08 L 29/04**

(54) Hydrophilic polymeric membranes, process for their preparation, their use as ultrafiltration membranes, and precursor membranes adapted to be converted thereto.

(30) Priority: **06.12.78 US 966868**
**24.05.79 US 42039**

(43) Date of publication of application:
**25.06.80 Bulletin 80/13**

(45) Publication of the grant of the patent:
**16.02.83 Bulletin 83/7**

(84) Designated Contracting States:
**AT BE CH DE FR GB IT NL SE**

(56) References cited:
DE - A - 2 217 375
FR - A - 2 057 052
FR - A - 2 147 269
FR - A - 2 360 623
FR - A - 2 361 439
FR - A - 2 391 836
GB - A - 1 351 188
US - A - 3 758 605
US - D - 276 993

(73) Proprietor: ABCOR, INC.
850 Main Street
Wilmington Massachusetts 01887 (US)

(72) Inventor: Jakabhazy, Stephen Z.
123 Newton Street
Weston Massachusetts (US)
Inventor: Zeman, Leos J.
10 Marchant Road
Winchester Massachusetts (US)

(74) Representative: Myerscough, Philip Boyd et al,
J.A.Kemp & Co. 14, South Square Gray's Inn
London, WC1R 5EU (GB)

(56) References cited:
CHEMICAL ABSTRACTS, vol. 89, no. 8, 21st
August 1978, page 22, no. 60362s Columbus,
Ohio, U.S.A. R.E. BERNSTEIN et al.: "Polymer
blends containing poly(vinylidene fluoride). Part
II. Poly(vinyl esters)".

Courier Press, Leamington Spa, England.

## 0 012 557

Hydrophilic polymeric membranes, process for their preparation,
their use as ultrafiltration membranes, and precursor
membranes adapted to be converted thereto

This application is directed to improved membranes which exhibit good hydrophilic properties, to a process for their preparation which overcomes some of the problems and difficulties of preparing known membranes, to the use of the improved membranes in ultrafiltration, particularly in the dairy field, for example for the ultrafiltration of whey, or in the treatment of oil-in-water emulsions, such as the ultrafiltration of soluble cutting-oil emulsions.

Many polymers have been used or suggested for use as membrane materials in membrane processes, such as ultrafiltration, reverse osmosis and electrodialysis membrane processes. Polymeric membranes are employed for separating selectively molecules, ions and suspended particles from carrier fluids. Polymeric membranes have been employed and suggested for ultrafiltration purposes, for separating proteins and other comparatively large molecules from water, such as, for example, the separation of proteins from lactose and mineral salts in whey, which is a by-product of the dairy industry. In addition, polymeric membranes also have been suggested for use in the ultrafiltration of soluble or suspended oils, such as the so-called water-soluble oils, which are often the effluent of operations which employ oils as coolants for high-speed metal-cutting machines.

In separations involving water-based carriers, it is desirable to employ a polymeric membrane which has good mechanical strength and which also exhibits desirable hydrophilic properties.

Membranes of fluorocarbon polymers, such as polyvinylidene fluoride (PVDF), are tough, having a good mechanical strength, and are chemically inert, so that they may be used for long periods in various environments. They are, however, hydrophobic in character and are not suitable for use in water-based separations. Good reasons thus exist for the modification of the extreme hydrophobic character of a PVDF membrane in order to render the membrane and membrane surface more hydrophilic in character. Chemical modification of PVDF is difficult, because of the extreme inertness and chemical resistance of PVDF. The incorporation of other polymeric components into PVDF, which polymer components themselves possess desirable properties which one would want to impart to PVDF, such as improved hydrophilic nature, presents other difficulties.

Typically, the compatibility of PVDF with hydrophilic polymers in general is very limited. Moreover, membranes made of PVDF polymeric blends, which employ a high enough concentration of the hydrophilic component, such as polyvinyl pyrrolidone, to impart sufficient hydrophilic characteristics to the resulting membrane surface, possess very low mechanical strength. Often when employed at very high levels, the hydrophilic polymer blended with the hydrophobic polymer leaches out from a membrane prepared from the blend. Therefore, while it is very desirable to prepare an improved membrane of a fluorocarbon, such as PVDF, having hydrophilic properties, there has been considerable difficulty in preparing such a membrane.

It has been found that an improved polymeric membrane can be prepared from a blend of a hydrophobic polymer, such as a hydrophobic, inert, chemically resistant fluorocarbon polymer, especially a vinylidene fluoride polymer, and a precursor polymer such as a vinyl acetate polymer which has good compatibility with the hydrophobic polymer and which may be altered chemically, such as by hydrolysis, after casting and forming of the membrane, to render hydrophilic in nature the blended polymeric or alloy membrane so prepared. Thus a precursor polymer, characterized by being converted to a hydrophilic polymer and being compatible in a solvent solution with the hydrophobic polymer, may be employed to prepare an improved alloy-type membrane exhibiting good mechanical strength, desirable membrane properties and, in particular, a hydrophilic membrane surface and properties.

The invention thus provides a hydrophilic microporous polymeric membrane comprising an intimate blend of a hydrophobic fluorocarbon polymer, preferably a vinylidene fluoride polymer and from 20 to 75% by weight, preferably 43 to 67% by weight, based on total polymer, of a vinyl alcohol polymer.

The invention also provides a precursor membrane adapted to be converted by hydrolysis into a membrane of the invention, which precursor membrane comprises an intimate blend of a hydrophobic fluorocarbon polymer from 35 to 85% by weight, based on total polymer, of a vinyl acetate polymer. Polyvinyl acetate is compatible with PVDF in all proportions, and a vinyl acetate precursor polymer is hydrolyzed easily to an ideal hydrophilic polymer, namely a vinyl alcohol polymer, thereby providing an improved hydrophilic membrane containing hydroxyl groups.

A preferred precursor membrane comprises PVDF and from 60 to 80% by weight of a vinyl acetate polymer. The precursor membrane is converted by hydrolysis into a hydrophilic PVDF-vinyl alcohol polymer membrane.

The membrane of the invention has the property of being extremely hydrophilic and contains hydroxyl groups on the membrane surface. The hydroxyl groups may be reacted to alter further the chemical and other properties of the membrane, such as, for example, by grafting vinyl monomers onto the hydrophilic membranes, such as by the reaction of styrene sulphonic acid monomers with the hydroxyl groups, or by the reaction of the hydroxyl groups, to alter the surface charge on the membrane surface and provide other anionic or cationic-type membranes. The reactants employed should be

2

**0 012 557**

capable of reacting with the hydroxyl groups, such as by grafting or epoxidation. The hydrophilic membranes of the invention may be dried and stored, and the dried membranes may be wetted easily and used without potential loss in their performance.

It has been discovered unexpectedly and surprisingly that high levels of the precursor vinyl acetate polymer are required in order, upon hydrolysis, to render hydrophilic the PVDF-containing membrane. Typically the amounts of vinyl acetate polymer required are over 35% by weight, based on the total amount of polymer. In addition, it has been found unexpectedly that the hydrophilic PVDF-vinyl alcohol polymer membrane is an extremely tough membrane with high mechanical strength, even though generally consisting of as much as 75 to 80% of vinyl alcohol polymer, in comparison to a maximum of about 15 to 20% of polyvinyl pyrrolidone that may be tolerated in PVDF-polyvinyl pyrrolidone membranes. Where the vinyl alcohol polymer content in a membrane is too low or below approximately 25% by weight, based on the total polymer, the performance of the alloy membrane, in separating oil and water emulsions, is not satisfactory in that the membrane is not sufficiently hydrophilic in nature.

One unique feature of the alloy membrane of the invention is the apparent strong interaction which binds the polymers together, which is manifested by the toughness of the membranes at high vinyl alcohol polymer contents and the inability to leach out polyvinyl alcohol from the improved alloy membrane, even in boiling water over a period of weeks, and the very high rejection of the membranes within certain composition ranges. Therefore, the improved membrane, comprising PVDF blended with hydrolyzed polyvinyl acetate, is a unique membrane which overcomes difficulties associated with prior art attempts to impart hydrophilic characteristics to otherwise hydrophobic fluorocarbon polymer membranes.

The hydrophilic membranes of the invention can be prepared in the usual manner of preparing polymeric membranes, except for the employment of a membrane-casting solution and subsequent steps of altering the chemical nature of a precursor polymer to render hydrophilic in nature the resulting membrane.

In another aspect the invention provides a process for preparing a hydrophilic microporous polymeric membrane, which process comprises casting a thin film of a casting solution comprising a solution of a hydrophobic fluorocarbon polymer, preferably a vinylidene fluoride polymer and from 35 to 85 weight percent, based on total polymer, of a vinyl acetate polymer in a solvent on a support base, partially evaporating the solvent from the cast film, contacting the partially evaporated cast film with a leaching liquid to render the film microporous, and hydrolyzing the vinyl acetate polymer in the leached membrane to convert the acetate groups to hydroxyl groups and provide a membrane having good mechanical strength and hydrophilic properties.

In the preparation of the membrane-casting solution for the preparation of the hydrophilic membranes of this invention, a wide variety of solvents may be employed; however, the choice of solvents is important, since the solvent choice usually affects membrane morphology, as well as membrane performance. With PVDF, most aprotic polar solvents, such as dimethyl acetamide, dimethyl formamide, N-methyl pyrrolidone and dimethyl sulphoxide, are acceptable solvent choices for dissolving and forming membrane-casting solutions of PVDF and the precursor polymer.

In general, solvents are employed which are soluble or miscible in the leaching liquid; for example water, and which solubilize both the PVDF and the precursor polymer and in which the two polymers are compatible. Volatile organic solvents, such as acetone, may be employed, and the time between casting and leaching may be controlled by the evaporation rate of the solvent to produce membranes of desired properties. Where aprotic polar solvents are employed alone, there may occur occlusions, resulting in an undesirable morphology of the membrane structure and in poor compaction resistance of the membrane. It is, therefore, often desirable to reduce the solvent power of the aprotic solvent in the membrane-casting solution in order to increase the rate of coacervation at the interface of the cast membrane with its first contact with the leaching liquid. Thus typically a nonsolvent or diluent liquid material is employed to result in a more stable and stronger interface and to avoid the formation of large occlusions in the resulting membrane.

A variety of nonsolvents or diluents may be employed, in amounts such as from 10 to 70% by weight; for example 20 to 50% by weight, of the casting solution. However, in the preparation of casting solutions containing PVDF and the vinyl acetate polymer, it has been found that triethyl phosphate is a particularly useful nonsolvent for replacing some of the dimethyl formamide in a casting solution. Where the concentration level of triethyl phosphate is from about 50 to 30% in a dimethyl formamide-containing, casting-solution mixture, large occlusions of the resulting cast film are avoided. Similar results are also obtained, for example, when N-methyl pyrrolidone is employed as a solvent and the nonsolvent is sulpholane at about 50% or higher levels of sulpholane concentration.

Another suitable casting solution with PVDF comprises acetone as the solvent and triethyl phosphate as the nonsolvent. Any nonsolvent employed should be compatible with the solvent and compatible with the leaching bath, so that it may be removed with the solvent in the leaching bath. An additional benefit of employing a diluent or nonsolvent in the membrane-casting solution is that such nonsolvent permits variations in the viscosity of the membrane-casting solution at fixed total solids level. The membrane-casting solutions used in accordance with the present invnetion provide for a

3

**0012557**

great flexibility in terms of modification of the casting solutions as compared with the casting solutions of other known commercial membrane systems. It has been found also that, due to the very high viscoelastic non-Newtonian nature of the membrane-casting solutions, very low solid levels of the fluorocarbon polymer and the precursor polymer can be used, and films may be cast particularly in tubular form, leading to high flux-type membranes.

While membranes can be prepared employing PVDF-polyvinyl acetate blends containing up to 95% by weight of polyvinyl acetate, based on total polymer, membranes made from blends with more than 85% by weight of polyvinyl acetate are mechanically too weak after hydrolysis to be of any practical importance and membranes made from blends with less than 35% by weight of polyvinyl acetate tend not to have sufficiently hydrophilic character. It has been found that, for optimum membrane performance for most applications, but particularly for ultrafiltration of oil-in-water emulsions, dairy applications, electrocoating applications and the like, polyvinyl acetate levels of 60 and 80% by weight are most desirable.

The PVDF employed is a thermoplastic polymer, which polymer is available from various sources with various degrees of chain regularity and crystallinity. It has been found that the most preferred PVDF to be employed for the separation of oil-in-water emulsions is a linear polymer of high crystallinity.

The precursor vinyl acetate polymer may be a homopolymer or a copolymer, with suitable copolymers including copolymers of vinyl acetate with acrylates, maleates and ethylene, and preferably is polyvinyl acetate, which polymer may be obtained from various sources. However, it has been found that polyvinyl acetates of high molecular weights, typically at least one million, are the preferred vinyl acetate polymers to be used with the linear, high crystallinity PVDF.

It has been found that the range of total solids in the membrane-casting solution useful for membrane formation may vary, but can be from 10 to 30% by weight, with a preferred range of the polymers in the membrane-casting solution of 15 to 25% by weight. For some particular ultrafiltration applications, such as ultrafiltration of water and oil emulsions, the preferred range is 15 to 22%, while for other applications, such as for dairy applications and the ultrafiltration of whey, the preferrred range is often 20 to 25%, with both flux and rejection of the final membrane being affected by the total solids in the membrane-casting solution. The thickness of the cast film used to prepare the membrane may vary as desired, but often such cast film is cast upon a porous or permeable material, typically a fabric-type support composed of, for example, polypropylene fibers or nonwoven fibrous material, the thickness of the cast film varying, for example, from 0.13 to 1.3 mm (5 to 50 mils), but typically 0.26 to 0.65 mm (10 to 25 mils) above the permeable support base, while, for high rejection-type ultrafiltration membranes, a range of 0.4 to 0.46 mm (16 to 18 mils) is often the optimum thickness.

In the preparation of the improved membranes partial evaporation of solvent (curing) is most readily achieved by exposing the cast film to the air. The time for evaporation of the solvent, that is, the time period between casting of the membrane film and the leaching of the film, may vary; however, it has been found that, for most applications, a relatively short curing or evaporating time is preferred, typically between 1 and 60 seconds; for example, between 5 and 20 seconds.

The leaching liquid employed in the leaching step may vary; however, for most purposes, the leaching liquid is water at about room temperature of 20 to 25°C. To attain the best membrane morphology with the particular solvent/nonsolvent membrane-casting solution used, it is often preferred to leach at slightly elevated temperatures; that is, usually above 35°C; for example 40 to 80°C.

After the recovery of the cast leached membrane from the leaching bath, the final process step to prepare the hydrophilic membrane is the alteration of the precursor polymer in the cast leached, or precursor membrane, such as by the treatment or reaction of the precursor membrane with a desired reactant to introduce hydrophilic groups into the membrane by the alteration of the precursor polymer in the membrane. In the membrane of the PVDF-vinyl acetate polymer blend, the acetate groups in the vinyl acetate polymer are hydrolyzed through chemical treatment and reaction to hydroxyl groups, thereby converting all of the vinyl acetate units to vinyl alcohol units. The techniques for converting a vinyl acetate polymer to a vinyl alcohol polymer are well known (see, for example, U.S. Patent 3,988,245). The techniques employed to hydrolyze the vinyl acetate polymer may vary, depending upon the membrane support material, which might be exposed to the chemical reaction. One hydrolysis process involves nonaqueous sodium methanolate-catalyzed methanolysis, while another technique uses aqueous acid or base-catalyzed hydrolysis reactions. Since most membranes are cast on a permeable membrane support, often the better choice, with respect to protection of the membrane support, is the aqueous acid-catalyzed hydrolysis technique. Typical hydrolysis procedures for a flat-sheet membrane would comprise the use of 1% by volume of sulphuric acid at 100°C for over 24 hours, while, for a tubular cast membrane, 10% by weight of sulphuric acid at 80 to 85°C over 16 to 20 hours may be employed. Other acids may be employed; however, sulphuric acid is the most preferred acid, as it does not destroy the preferred fabric support materials.

The hydrophilic PVDF-vinyl alcohol polymer membranes prepared as described have desirable properties for use as ultrafiltration membranes in concentrating water-based liquid streams in the dairy and oil emulsion applications and as substrates for reverse osmosis membranes, particularly where the reactive hydroxyl groups are further reacted.

The PVDF-vinyl alcohol polymer membranes of the invention are vastly superior in properties to membranes, for example, wherein polyvinyl acetate and PVDF are mixed without hydrolysis, since such membranes have a very low water flux and fail to reject oil in the ultrafiltration of water and oil emulsions. Further, membranes containing PVDF and polyvinyl acetate, in which polyvinyl acetate is present in the concentration level of up to about 30% by weight of total polymer, do not have sufficient hydrophilic properties after hydrolysis, and, in fact, such membranes have poorer performance characteristics in separation of oil and water than membranes formed from PVDF alone. Therefore, the membranes of this application and membrane-casting solution for their preparation are quite unique.

The invention will be further described by reference to the following Examples.

### Example 1

A membrane-casting solution is prepared by combining in a Waring Blender 168.0 g of triethyl phosphate (TEP) and 72.0 g of dimethyl formamide (DMF), and, while mixing at a slow speed, there is added 39.0 g of polyvinyl acetate (MW~1,200,000). The mixture is further mixed for 3 to 5 minutes, and, after that, the mixture is mixed periodically for short periods of time. Polyvinyl acetate dissolves into the solvent/nonsolvent solution of TEP and DMF in no more than about 2 to 3 hours. When all polyvinyl acetate is in solution, there is slowly added to the blender 21.0 g of PVDF, while agitating the solution in the blender. After all the PVDF has been added, the solution is allowed to stand for about 30 minutes. After final agitation, the solution is ready for centrifugation and casting.

### Example 2

A membrane-casting solution is prepared in an 18.9 litre (5 U.S. gallon) Hobart mixer kettle by adding 13 kg (28.7 lbs) of dimethyl acetamide (DMAc), and, while stirring, there is sifted slowly into the kettle 1 kg (2.205 lbs) of PVDF. Agitation is continued for about 45 to 60 minutes. There is then added 1.86 kg (4.095 lbs) of polyvinyl acetate while mixing. Mixing is continued at low speed over a period of about 2 hours. The Hobart kettle is then removed, covered tightly and placed in an oven at about 75°C for an overnight period; for example, about 12 hours. The mixture is then agitated the next day for about an additional 2 hours while it is still warm. Thereafter, the membrane-casting solution is ready for use.

### Example 3

An improved membrane was prepared employing the casting solution as prepared in either Example 1 or 2 by casting the solution on a support material, such as a nonwoven web of polyester fibers about 0.18 mm (7 mils) thick, taped to a glass plate and cast as a film layer 0.46 mm (18 mils) thick. Within about 5 seconds, the cast film on the glass plate is immersed in water at a room temperature of 20°C, and the membrane is leached in the leaching water bath over a period of 16 to 24 hours. The PVDF-polyvinyl acetate membrane is then removed from the glass plate and is hydrolyzed in a solution comprising 1% by volume of sulphuric acid under reflux conditions over about 24 hours. The hydrolyzed membrane is then removed and washed and may, thereafter, be employed in membrane operations, such as the ultrafiltration of oil and water emulsions

### Example 4

A membrane was made from a casting solution as in Example 3, with the casting solution containing about 15% by weight of polyvinyl acetate, 8% by weight of PVDF, a combined total of about 23% by weight of the total polymer, and 77% by weight of dimethyl acetamide. The membrane-casting solution was cast at 0.2 mm (8 mils) thickness on a porous polyester support sheet, was left exposed to air for about 60 seconds and then was leached in water at room temperature. The cast membrane was then recovered and hydrolyzed as in Example 3. The membrane was then tested at 345 kPa (50 psig) and at 25°C in a flat cell employing two standard water-surfactant solutions containing 1000 ppm of the surfactant. The surfactants employed were surfactants known as Tetronic surfactant 1107 and Tetronic surfactant 707, which are commercially made and produced by BASF-Wyandotte Corporation. Tetronic is a trademark for a nonionic tetrafunctional series of surfactant polymers, which are polyoxyalkylene derivatives of ethylene diamine, with Tetronic 1107 having an average molecular weight of approximately 14,500 and Tetronic 707 having an average molecular weight of approximately 12,000. The membranes were tested by measuring the surfactant concentration in the feed and permeate streams, as well as the permeate flux. Results of the test, expressed as percent rejection of the surfactant and permeate flux in litres per square meter per day (LMD), are shown in Table I.

# 0012557

TABLE I

| Tetronic 1107 | | Tetronic 707 | |
|---|---|---|---|
| Flux LMD | Rejection % | Flux LMD | Rejection % |
| 997 | 99.3 | 834 | 99.5 |

## Example 5

A membrane was prepared from a casting solution containing 12% polyvinyl acetate, 6% PVDF and 82% dimethyl acetamide and was cast at 0.28 mm (11 mils) thickness on a polyester support, cured for 5 minutes and then tested after hydrolysis with a synthetic oil-in-water emulsion. The process flux at 207 kPa (30 psig) was 8138 LMD, with less than 6 ppm of oil in the permeate stream.

## Example 6

Membranes as prepared in Example 5, but cast at various thicknesses, were tested using skimmed milk at thicknesses of between 0.38 mm and 0.635 mm (15 and 25 mils), with the following results:

| Elapsed time min. | Relative flow rate | 0.38 mm LMD | 0.51 mm LMD | 0.635 mm LMD |
|---|---|---|---|---|
| 15 | 1 | 798 | 635 | 1058 |
| 120 | 1 | 899 | 741 | 1058 |
| 130 | 3 | 1322 | 1851 | — |
| 150 | 1 | 798 | 741 | — |

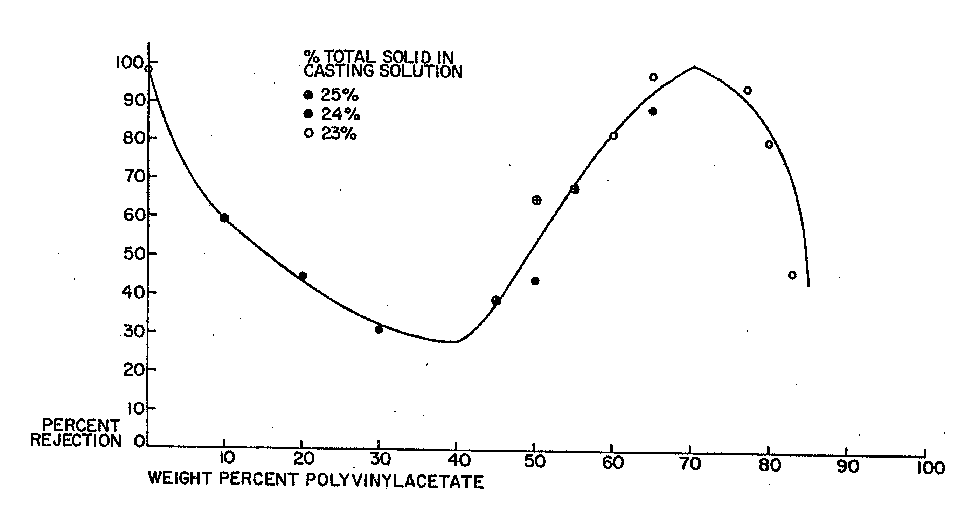

Membranes were prepared from casting solutions containing 25, 24 and 23 weight percent polymer in dimethyl acetamide at a variable PVAC-to-PVDF ratio. Membranes were cast at 0.635 mm (25 mils) thickness on a polyester support and left exposed to air for about 5 seconds before immersion in a water-leaching bath. Polyvinyl acetate then was converted almost entirely to polyvinyl alcohol through hydrolysis. The membranes so prepared were then tested for rejection employing as standard solution an aqueous solution containing 1000 ppm of Tetronic surfactant. The results are shown in the accompanying drawing which is a graphic illustration of the percent rejection of the standard solution versus the weight percent of polyvinyl acetate based on total solids in the casting solution.

As illustrated, there is an abrupt change in the percent rejection for a weight percent of polyvinyl acetate between approximately 40 and about 85. With amounts of polyvinyl acetate of less than 40 weight percent, membranes have a very low rejection, as do membranes made from solutions containing 85% polyvinyl acetate. As shown, membranes made from solutions containing between 60 to 80%, and preferably 70%, polyvinyl acetate have high rejection and Tetronic 1107. Similar tests conducted with Tetronic 707 show a similarly shaped curve with somewhat lower rejections.

Thus the preparation of a homogeneous blend of PVDF and polyvinyl acetate in an appropriate solvent and the subsequent hydrolysis of the membrane cast from this blend provide an improved membrane having unique hydrophilic and rejection properties.

## Claims

1. A hydrophilic microporous polymeric membrane comprising an intimate blend of a hydrophobic fluorocarbon polymer and from 20 to 75% by weight, based on total polymer, of a vinyl alcohol polymer.

2. A membrane according to claim 1 wherein the hydrophobic fluorocarbon polymer is a vinylidene fluoride polymer.

3. A membrane according to claim 2 wherein the vinylidene fluoride polymer is of substantially regular and linear structure and of high crystallinity.

4. A membrane according to claim 1, 2 or 3 wherein the vinyl alcohol polymer is the hydrolysis product of a vinyl acetate homopolymer having a molecular weight of at least $10^6$.

5. A membrane according to any one of claims 1 to 4 which contains from 43 to 67% by weight of the vinyl alcohol polymer.

6. A process for preparing a hydrophilic microporous polymeric membrane as claimed in any one of the preceding claims, which process comprises casting a thin film of a casting solution comprising a solution of the hydrophobic fluorocarbon polymer and from 35 to 85 weight percent, based on total polymer, of a vinyl acetate polymer in a solvent on a support base, partially evaporating the solvent from the cast film, contacting the partially evaporated cast film with a leaching liquid to render the film microporous, and hydrolyzing the vinyl acetate polymer in the leached membrane to convert the acetate groups to hydroxyl groups.

7. A process according to claim 6 wherein the vinyl acetate polymer is a polyvinyl acetate having a molecular weight of at least $10^6$.

8. A process according to claim 6 or 7 wherein the casting solution contains from 60 to 80 weight percent, based on total polymer, of the vinyl acetate polymer.

9. A process according to any one of claims 6 to 8 wherein the casting solution comprises from 15 to 25% by weight of polymer.

10. A process according to any one of claims 6 to 9 wherein the casting solution comprises, as polar solvent, at least one of dimethyl acetamide, dimethyl formamide, N-methyl pyrrolidone, dimethyl sulphoxide and acetone.

11. A process according to any one of claims 6 to 10 wherein the casting solution also comprises, as diluent, triethyl phosphate or sulpholane.

12. A process according to any one of claims 6 to 11 wherein the casting solution is cast in a thin film onto a porous and fibrous support base.

13. A process according to any one of claims 6 to 12 wherein the film is cast in a thickness of 0.13 to 1.3 mm.

14. A process according to any one of claims 6 to 13 wherein partial evaporation of solvent is brought about by exposing the cast film to air for between 1 and 60 seconds.

15. A process according to any one of claims 6 to 14 wherein the leaching liquid comprises water and the leaching temperature is from 40 to 80°C.

16. A process according to any one of claims 6 to 15 which comprises hydrolyzing the leached membrane by the nonaqueous sodium methanolate-catalyzed methanolysis of the vinyl acetate.

17. A process according to any one of claims 6 to 15 which comprises hydrolyzing the leached membrane by an aqueous acid or base-catalyzed hydrolysis reaction.

18. A process according to any one of claims 6 to 17 comprising the additional step of producing a modified hydrophilic membrane by treatment thereof with a reactant capable of reacting with hydroxyl groups.

19. A process according to claim 18 wherein the reactant is a styrene sulphonic acid monomer.

20. Use of a membrane as claimed in any one of claims 1 to 5 or as produced by a process as claimed in any one of claims 6 to 19 as an ultrafiltration membrane in the ultrafiltration of oil-in-water emulsions or whey.

21. A precursor membrane for conversion by hydrolysis into a membrane as claimed in any one of claims 1 to 5, which precursor membrane comprises an intimate blend of the fluorocarbon polymer and from 35 to 85% by weight, based on total polymer, of the vinyl acetate polymer.

**Revendications**

1. Membrane polymérique microporeuse hydrophile, caractérisée par le fait qu'elle comprend un mélange intime d'un polymère fluorocarboné hydrophobe et de 20 à 75% en poids par rapport au poids total des polymères, d'un polymère alcool vinylique.

2. Membrane selon la revendication 1, caractérisée par le fait que le polymère fluorocarboné hydrophobe est une polymère fluorure de vinylidène.

3. Membrane selon la revendication 2, caractérisé par le fait que le polymère de fluorure de vinylidène est de structure essentiellement régulière et linéaire et de cristallinité élevée.

4. Membrane selon l'une quelconque des revendications 1, 2 ou 3, caractérisée par le fait que le polymère alcool vinylique est le produit d'hydrolyse d'un homopolymère acétate de vinyle ayant un poids moléculaire d'au moins $10^6$.

5. Membrane selon l'une quelconque des revendications 1 à 4, caractérisé par le fait qu'elle contient de 43 à 67% en poids de polymère alcool vinylique.

6. Procédé de préparation d'une membrane polymérique microporeuse hydrophile selon l'une quelconque des revendications précédentes, caractérisé par le fait que ledit procédé comprend les étapes consistant à couler sur une base support un film fin d'une solution de coulage comprenant une solution de polymère fluorocarboné hydrophobe et de 35 à 85% en poids, par rapport au poids total des polymères, d'un polymère acétate de vinyle dans un solvant, à évaporer partiellement le solvant du film coulé, à mettre en contact le film coulé, partiellement évaporé, avec un liquide de lixiviation en vue de rendre le film microporeux et à hydrolyser le polymère acétate de vinyle dans la membrane lixiviée pour convertir les groupes acétates en groupes hydroxyles.

7. Procédé selon la revendication 6, caractérisé par le fait que le polymère acétate de vinyl est un polyacétate de vinyle ayant un poids moléculaire d'au moins $10^6$.

8. Procédé selon l'une quelconque des revendications 6 et 7, caractérisé par le fait que la solution de coulage contient de 60 à 80% en poids, par rapport au poids total des polymères, de polymère acétate de vinyle.

9. Procédé selon l'une quelconque des revendications 6 à 8, caractérisé par le fait que la solution de coulage comprend de 15 à 25% en poids de polymère.

7

10. Procédé selon l'une quelconque des revendications 6 à 9, caractérisé par le fait que la solution de coulage comprend en tant que solvant polaire de la diméthyl acétamide, de la diméthyl formamide, de la N-méthyl pyrrolidone, du diméthyl sulfoxyde ou de l'acétone, seul ou en mélange.

11. Procédé selon l'une quelconque des revendications 6 à 10, caractérisé par le fait que la solution de coulage comprend également en tant que diluant du phosphate de triéthyle ou du sulfolane.

12. Procédé selon l'une quelconque des revendications 6 à 11, caractérisé par le fait que la solution de coulage est coulée en un film fin sur une base support poreuse et fibreuse.

13. Procédé selon l'une quelconque des revendications 6 à 12, caractérisé par le fait que le film est coulé en une épaisseur de 0,13 à 1,3 mm.

14. Procédé selon l'une quelconque, des revendications 6 à 13, caractérisé par le fait que l'évaporation partielle du solvant est effectuée par exposition du film coulé à l'air pendant 1 à 60 secondes.

15. Procédé selon l'une quelconque des revendications 6 à 14, caractérisé par le fait que le liquide de lixiviation comprend de l'eau et que la température de lixiviation est de 40 à 80°C.

16. Procédé selon l'une quelconque des revendications 6 à 15, caractérisé par le fait qu'il comprend l'hydrolyse de la membrane lixiviée par méthanolyse, catalysée par du méthylate de sodium non aqueux, de l'acétate de vinyle.

17. Procédé selon l'une quelconque des revendications 6 à 15, caractérisé par le fait qu'il comprend l'hydrolyse de la membrane lixiviée par réaction d'hydrolyse catalysée par un acide aqueux ou une base.

18. Procédé selon l'une quelconque des revendications 6 à 17, caractérisé par le fait qu'il comprend également l'étape de formation d'une membrane hydrophile modifiée par traitement subséquent avec un réactif susceptible de réagir avec les groupes hydroxyles.

19. Procédé selon la revendication 18, caractérisé par le fait que le réactif est un monomère acid styrène sulphonique.

20. Utilisation de la membrane selon l'une quelconque des revendications 1 à 5 ou telle que préparée selon l'une quelconque des revendications 6 à 19 comme membrane d'ultrafiltration dans l'ultrafiltration d'émulsions huile-dans-l'eau ou du petit lait.

21. Précurseur de membrane pour transformation par hydrolyse en une membrane telle que revendiquée selon l'une quelconque des revendications 1 à 5, caractérisé par le fait que ledit précurseur de membrane comprend un mélange intime de polymère fluorocarboné et de 35 à 85% en poids, par rapport au poids total des polymères, de polymère acétate de vinyle.

**Patentansprüche**

1. Hydrophile, mikroporöse polymere Membran gekennzeichnet durch eine innige Mischung eines hydrophoben Fluorkohlenstoff-polymers und bezogen auf das gesamte Polymer 20 bis 75 Gew.% eines Vinylalkoholpolymers.

2. Membran nach Anspruch 1, dadurch gekennzeichnet, daß das hydrophobe Fluorkohlenstoffpolymer ein Vinylidenfluoridpolymer ist.

3. Membran nach Anspruch 2, dadurch gekennzeichnet, daß das Vinylidenfluoridpolymer eine im wesentlichen reguläre und lineare Struktur sowie eine hohe Kristallinität besitzt.

4. Membran nach Anspruch 1, 2 oder 3, dadurch gekennzeichnet, daß das Vinylalkoholpolymer das Hydrolyseprodukt eines Vinylacetathomopolymers mit einem Molekulargewicht von mindestens $10^6$ ist.

5. Membran nach jedem der Ansprüche 1 bis 4, dadurch gekennzeichnet, daß sie 43 bis 67 Gew.% des Vinylalkoholpolymers enthält.

6. Verfahren zur Herstellung einer hydrophilen mikroporösen polymeren Membran gemäß jedem der vorangehenden Ansprüche, dadurch gekennzeichnet, daß ein dünner Film aus einer Gußlösung auf einen Träger gegossen wird, die eine Lösung des hydrophoben Fluorkohlenstoffpolymers und bezogen auf das gesamte Polymer 35 bis 85 Gew.% Vinylacetatpolymer in einem Lösungsmittel enthält, das Lösungsmittel aus dem gegossenen Film teilweise verdampft wird, der resultierende Film mit einer Auslaugungsflüssigkeit kontaktiert wird, um den Film mikroporös zu machen, und das Vinylacetatpolymer in der ausgelaugten Membran hydrolisiert wird, um die Acetatgruppen in Hydroxylgruppen umzuwandeln.

7. Verfahren nach Anspruch 6, dadurch gekennzeichnet, daß das Vinylacetatpolymer ein Polyvinylacetat mit einem Molekulargewicht von mindestens $10^6$ ist.

8. Verfahren nach Anspruch 6 oder 7, dadurch gekennzeichnet, daß die Gußlösung bezogen auf das gesamte Polymer 60 bis 80 Gew.% des Vinylacetatpolymers enthält.

9. Verfahren nach jedem der Ansprüche 6 bis 8, dadurch gekennzeichnet, daß die Gußlösung 15 bis 25 Gew.% Polymer enthält.

10. Verfahren nach jedem der Ansprüche 6 bis 9, dadurch gekennzeichnet, daß die Gußlösung als polares Lösungsmittel mindestens ein Lösungsmittel aus der Gruppe Dimethylacetamid, Dimethylformamid, N-Methylpyrrolidon, Dimethylsulfoxid und Aceton enthält.

11. Verfahren nach jedem der Ansprüche 6 bis 10, dadurch gekennzeichnet, daß die Gußlösung als Verdünnungsmittel außerdem Triethylphosphat oder Sulfolan enthält.

12. Verfahren nach jedem der Ansprüche 6 bis 11, dadurch gekennzeichnet, daß die Gußlösung als dünner Film auf einen porösen und fibrösen Träger gegossen wird.

13. Verfahren nach jedem der Ansprüche 6 bis 12, dadurch gekennzeichnet, daß der Film in einer Dicke von 0,13 bis 1,3 mm gegossen wird.

14. Verfahren nach jedem der Ansprüche 6 bis 13, dadurch gekennzeichnet, daß die teilweise Verdampfung des Lösungsmittels erfolgt, indem der gegossene Film 1 bis 60 Sek. Luft ausgesetzt wird.

15. Verfahren nach jedem der Ansprüche 6 bis 14, dadurch gekennzeichnet, daß die Auslaugungsflüssigkeit Wasser enthält und die Auslaugungstemperatur 40 bis 80°C beträgt.

16. Verfahren nach jedem der Ansprüche 6 bis 15, dadurch gekennzeichnet, daß die ausgelaugte Membran durch nichtwässrige natriummethanolat-katalysierte Methanolyse des Vinylacetats hydrolisiert wird.

17. Verfahren nach jedem der Ansprüche 6 bis 15, dadurch gekennzeichnet, daß die ausgelaugte Membran durch eine wässrige säure- oder basekatalysiert Hydrolysereaktion hydrolisiert wird.

18. Verfahren nach jedem der Ansprüche 6 bis 17, dadurch gekennzeichnet, daß durch eine zusätzliche Verfahrensstufe eine modifizierte hydrophile Membran hergestellt wird, indem die hydrophile Membran mit einem Reaktanten umgesetzt wird, der mit Hydroxylgruppen reagieren kann.

19. Verfahren nach Anspruch 18, dadurch gekennzeichnet, daß der Reaktant ein Styrolsulfonsäuremonomer ist.

20. Verwendung einer Membran gemäß jedem der Ansprüche 1 bis 5 oder hergestellt nach einem Verfahren gemäß jedem der Ansprüche 6 bis 19 als Ultrafiltrationsmembran bei der Ultrafiltration von Öl-in-Wasser-Emulsionen oder Molke.

21. Membranvorläufer zur Umwandlung in eine Membran gemäß jedem der Ansprüche 1 bis 5 durch Hydrolyse gekennzeichnet durch eine innige Mischung des Flourkohlenstoffpolymers und bezogen auf das gesamte Polymer 35 bis 80 Gew.% des Vinylacetatpolymers.

PERCENT REJECTION vs WEIGHT PERCENT POLYVINYLACETATE

% TOTAL SOLID IN CASTING SOLUTION
- 25%
- 24%
- 23%

0012 557